(19) Europäisches Patentamt
European Patent Office
Office européen des brevets

(11) EP 1 013 701 B1

(12) **EUROPÄISCHE PATENTSCHRIFT**

(45) Veröffentlichungstag und Bekanntmachung des Hinweises auf die Patenterteilung:
**14.04.2004 Patentblatt 2004/16**

(51) Int Cl.[7]: **C08G 77/38**, C08G 77/46, B01J 19/18, C07F 7/08

(21) Anmeldenummer: **99124594.5**

(22) Anmeldetag: **10.12.1999**

(54) **Verfahren und Vorrichtung zur Durchführung kontinuierlicher Hydrosilylierungsreaktionen**
Process and apparatus for continous hydrosilylation reactions
Prcédé et appareil pour l'hydrosilylation en continu

(84) Benannte Vertragsstaaten:
**DE FR GB IT**

(30) Priorität: **23.12.1998 DE 19859759**

(43) Veröffentlichungstag der Anmeldung:
**28.06.2000 Patentblatt 2000/26**

(73) Patentinhaber: **Goldschmidt AG**
**45127 Essen (DE)**

(72) Erfinder:
- **Dröse, Jürgen**
**45141 Essen (DE)**
- **Geisler, Hubertus, Dr.**
**59457 Werl (DE)**
- **Hiersche, Wolfgang**
**45147 Essen (DE)**
- **Klein, Klaus-Dieter, Dr.**
**45468 Mülheim (DE)**
- **Knott, Wilfried, Dr.**
**45141 Essen (DE)**
- **Mehrwald, Andreas, Dr.**
**45307 Essen (DE)**
- **Windbiel, Dagmar**
**45289 Essen (DE)**

(56) Entgegenhaltungen:
**EP-A- 0 668 309**
**DE-A- 19 632 157**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein kontinuierliches Verfahren zur Herstellung von organomodifizierten Polysiloxanen durch die Übergangsmetall-katalysierte Addition von SiH-Gruppen enthaltenden Polysiloxanen an CC-Mehrfachbindungen enthaltende Substanzen. Desweiteren wird eine geeignete technische Vorrichtung zur Durchführung des erfindungsgemäßen Verfahrens beschrieben.

Unter den Verfahren zum Aufbau und zur Modifizierung von Organosiloxanen kommt der Übergangsmetall-katalysierten Hydrosilylierung eine besondere Bedeutung zu, da sie in vielfältiger Weise SiC-Verknüpfungen ermöglicht. Ungeachtet der Anwendungsbreite dieser Reaktion ist deren technische Umsetzung jedoch oft von erheblichen Schwierigkeiten begleitet. Im Mittelpunkt dieser Probleme steht die zeitlich veränderliche, und vielen Störeinflüssen ausgesetzte Katalysatoraktivität. Vor dem Hintergrund der bei Hydrosilylierungsreaktionen freiwerdenden Energie (Exothermie) führt eine schwankende Katalysatoraktivität in Batchprozessen nicht selten zu kritischen Betriebszuständen, da sich zwischenzeitlich Reaktandmengen kumulieren und damit ein Gefahrenpotential aufbauen können. Der Batchprozeß repräsentiert den üblichen Stand der Technik für technische Hydrosilylierungen, nicht zuletzt, da erfahrungsgemäß eine Präformierungsphase zur Bildung der katalytisch aktiven Spezies aus dem inaktiven Vormaterial zwingend zu durchlaufen ist. Die schwankenden Reaktionsverläufe technischer Hydrosilylierungsreaktionen bedingen eine hohe Präsenz qualifizierter Mitarbeiter.

Ein besonderes Gefahrenpotential geht von den stofflichen Systemen bei Hydrosilylierungsprozessen aus, die eine hohe Hydridwasserstoffdichte aufweisen. Neben den monomeren Silanen sind hier speziell die Derivate des Poly-(methylwasserstoff)-siloxans zu nennen.

Einhergehend mit dem Gefahrenmoment liefern die kritischen Systeme auch unerwünschte Nebenprodukte, d.h. die Selektivität der Zielreaktion leidet.

Bemerkenswerterweise trachten daher die bekannten chemischen Verfahren zur Herstellung organofunktionalisierter Poly(methylwasserstoff)-siloxane danach, die Stationärkonzentration aktiver SiH-Gruppen im SiC-verknüpfenden Schritt zu minimieren.

Beispielsweise beschreibt die WO 98/05700 einen (semi)kontinuierlichen Prozeß zur Herstellung multifunktioneller Polyorganosiloxane mit Si-Alkyl- und Si-Alkoxy-Gruppen in einer vielstufigen Reaktionsvorrichtung, die aus einer Kombination eines Dehydrokondensationsreaktors mit einem Hydrosilylierungsreaktor besteht. Der Dehydrokondensationsreaktor wird mit einem SiH-haltigen Polyorganosiloxan und - hierauf bezogen im Unterschuß - mit einem Alkohol bzw. Thioalkohol in Gegenwart eines Platinkatalysators beschickt, wobei unter $H_2$-Freisetzung ein gemischtes Alkoxy-Wasserstoffsiloxan bzw. Thioalkoxy-Wasserstoffsiloxan entsteht, das dann unverzüglich mit einem Olefin in einem nachgeschalteten Hydrosilylierungsreaktor der SiC-verknüpfenden Alkylierung unterzogen wird. Auf Seite 2, Zeile 29 bis Seite 3, Zeile 3 dieser Schrift wird auf die Gefahrenmomente im Umgang mit SiH-haltigen Verbindungen - selbst solchen mit zum Teil Alkoxy- beziehungsweise Thioalkoxy-funktionalisierten Ketten- abgestellt. Bewußt wird die eigentliche Hydrosilylierung daher erst nach der partiell-entschärfenden Reaktion (Dehydrokondensation) durchgeführt, obwohl der Betrieb dieses Prozesses mit dem technischen Problem der Gewährleistung einer vollständigen Abtrennung von Alkohol/Thiol und Wasserstoffgas vor der Hydrosilylierung einhergeht. Apparatetechnisch wird daher eine aufwendige und kostspielige Lösung notwendig.

Auch an sich bereits bekannte kontinuierliche Verfahren zur Hydrosilylierung zielen auf eine Absenkung der In-Situ-Konzentration aktiver SiH-Gruppen ab. Die DE 196 32 157 A lehrt ein Verfahren zur kontinuierlichen Herstellung von Organosiliciumverbindungen vom Typ der 3-Halogen-Propyl-Organosilane der allgemeinen Struktur $R_bH_{3-a-b}X_aSiCH_2CH_2CH_2Y$ durch die Umsetzung eines Allylhalogenids mit einem wenigstens ein H-Atom tragenden Silan, das im Überschuß vorgegeben wird. Als unerwünschte Nebenprodukte entstehen nicht verwertbare Propyl-Organosilane. Das wesentliche Merkmal dieses Verfahrens besteht darin, daß man durch Einstellen eines Teilumsatzes der Edukte von 10-80 '% bezogen auf die Unterschußkomponente die Nebenproduktbildung zurückdrängt.

Ein weiteres Verfahren zur kontinuierlichen Durchführung von Hydrosilylierungsreaktionen wird in der DE 196 19 138 A offenbart. Beschrieben wird ein Verfahren zur Herstellung von vinylierten Organo-Silicium-Verbindungen, das dadurch gekennzeichnet ist, daß man eine wenigstens eine SiH-Gruppe enthaltende Silicium-organische Verbindung mit Acetylen im Überschuß in einer weitgehend inerten Flüssigphase in Gegenwart eines Katalysators zur Umsetzung bringt. Zur Sicherung einer intensiven Durchmischung der Reaktionsmatrix gelangt ein Strahldüsenschlaufenreaktor zum Einsatz.

Als kontinuierliche Gasphasenprozesse in einem Durchflußreaktor sind sowohl die Anlagerung von Acetylen an Methyldichlorsilan an einem Chrysotil-Asbest verankerten Wilkinson-Katalysator (Appl. Organomet. Chem. (1987), 1 (5), 459-63), als auch die mit eingeschränkter Selektivität verlaufende Hydrosilylierung von Acetylen mit Trichlorsilan an auf $SiO_2$-fixierten Rh- und Ru-Phosphinkomplexen beschrieben (Appl. Organomet. Chem. (1987), 1 (3), 267-73).

Der Stand der Technik dokumentiert somit drei Verfahren zur Verdünnung aktiver SiH-Gruppen:

die Teilumsatz-Fahrweise,

die Verwendung einer inerten Flüssigphase und
die Reaktion im Gasraum.

Die EP-A-0 668 309 beschreibt ein kontinuierliches Verfahren zur hydrolytischen Polymerisation von Laurinlactam, bei welchem in einer bevorzugten Ausführungsform in einem ersten Schritt in einem Schlaufenreaktor für die hydrolytische Ringspaltung ein Teilumsatz von 30 bis 40 % eingestellt wird, die restliche Hydrolyse zusammen mit der Polykondensation dann in einem nachgeschalteten Rohrreaktor durchgeführt wird. Hinweise, dass diese Vorgehensweise für die Anwendung bei der Herstellung organomodifizierter Polysiloxane durch die Übergangsmetallkatalysierte Addition von SiH-Gruppen enthaltenden Polysiloxanen an CC-Mehrfachbindungen enthaltende Substanzen geeignet sein könnte, sind dieser Lösung nicht zu entnehmen.

Vor diesem Hintergrund stellte sich nun das Problem der Erfindung, ein Verfahren bereitzustellen, das unter Vermeidung von bekannten Gefahrenpotentialen eine wirtschaftliche und reproduzierbare Durchführung der Hydrosilylierungsreaktion auch in schwierigen stofflichen Systemen gestatten und darüber hinaus auf komplizierte und teure Apparatetechnik verzichtet. Außerdem sollte das Verfahren eine gleichbleibend hohe Produktqualität bei sparsamem Einsatz der hochpreisigen Edelmetallkatalysatoren sichern. Darüber hinaus sollte das Verfahren bei nahezu vollständigem Umsatz, unter Verzicht auf eine inerte Hilfsphase und auch für nicht unzersetztverdampfbare, höhermolekulare Reaktanden anwendbar sein.

Die vorgenannte Aufgabe wird in einer ersten Ausführungsform der Erfindung gelöst durch ein kontinuierliches Verfahren zur Herstellung von organomodifizierten Polysiloxanen durch die Übergangsmetall-katalysierte Addition von SiH-Gruppen enthaltenden Polysiloxanen an CC-Mehrfachbindungen enthaltende Substanzen, welches dadurch gekennzeichnet ist, daß man die Reaktanden in einen temperierbaren Schlaufenreaktor einbringt, der ein statisches Mischelement und/oder ein dynamisches Mischelement aufweist, um Edukte und gebildetes Produkt zu vermischen, das Reaktionsgemisch bis zu einem vorbestimmten Umsetzungsgrad in dem Reaktionskreislauf beläßt, anschließend das noch Edukte enthaltende Reaktionsgemisch zur Vervollständigung der Reaktion in einen Rohrreaktor oder eine Rührkesselkaskade überführt und über eine Vorlage entnimmt.

Eine allgemeine Darstellung des der Erfindung zugrundeliegenden Prinzips ist in Fig 1 dargestellt.

Der Stoffstrom ist gegenüber dem der Temperierung (Kühlung oder Heizung) zu den variablen Anlagenparametern dienenden Ölkreislauf durch einen breiteren Strich hervorgehoben. Die in den Vorlagen B1 und B2 befindlichen, gegebenenfalls mit Katalysator beaufschlagten, Edukte werden mit Hilfe der Dosierpumpen P1 und P2 in den Loopreaktor eingespeist. Die fortwährende Umwälzung des Reaktandgemisches innerhalb des Loops wird durch die Pumpe P3 gewährleistet. Zur Unterstützung einer intensiven Durchmischung der Reaktionsmatrix sind statische Mischelemente (SM) in den Loop integriert. Nach einer vorbestimmten Verweilzeit tritt das Reaktionsgemisch in den Rohrreaktor über. Ist die Nachreaktion im Rohrreaktor abgeschlossen, wird das Produkt in der Vorlage B3 aufgefangen.

Überraschenderweise wurde gefunden, daß die geforderten Anforderungen durch ein Reaktorsystem erfüllt werden, in dem dosierte Reaktandenströme in Gegenwart eines heterogenen oder homogenen Edelmetallkatalysators durch einen temperierbaren Loopreaktor (Schlaufenreaktor) in Kombination mit einem temperierbaren Rohrreaktor geschleust werden. Der Loopreaktor übernimmt hierbei die Funktion, die kritische Anfangsphase der einsetzenden Hydrosilylierung steuerbar zu machen. Der Kumulation kritischer Stoffmengen an Edukten wird im Loopreaktor durch eine schnelle und intensive Vermischung begegnet, die sowohl durch den Einbau statischer Mischelemente als auch durch eine hohe Umwälzleistung der integrierten Förderpumpe gewährleistet ist. Wahlweise können die statischen Mischelemente auch durch im Durchfluß betriebene dynamische Mischer, beispielsweise nach dem Rotor/Stator-Prinzip, ersetzt oder auch in Kombination mit diesen verwendet werden (Fig. 2). Diese Maßnahmen bewirken einzeln und/oder in Kombination eine zeitadäquate, zügige Abreaktion von SiH-Gruppen-tragender und CC-Mehrfachbindung aufweisenden Substanz. Der mit dem Loopreaktor durch einen Überlauf verbundene Rohrreaktor dient der geringer exothermen Nachreaktion der Reaktionsmischung.

Das Verfahren der vorliegenden Erfindung ist somit bevorzugt in einer Vorrichtung zur kontinuierlichen Hydrosilylierung von wenigstens eine CC-Mehrfachbindung enthaltenen Substanzen umfassend eine Vorlage (B1) zur Aufnahme der gegebenenfalls mit einem Katalysator beaufschlagten Substanz, eine Vorlage (B2) zur Aufnahme der Hydrosilylierungskomponente, Fördereinrichtung (P1, P2) zum Einbringen eines Eduktstroms in einen schlaufenförmigen, temperierbaren Reaktionskreislauf, enthaltend ein stationäres Mischelement oder ein dynamisches Mischelement (SM) zum Vermischen der Edukte und des gebildeten Produkts, Einrichtungen zum Ableiten der Reaktionswärme, einen Rohrreaktor zur Vervollständigung der Reaktion und Einrichtungen zum Auffangen des Produktes (B3) realisierbar.

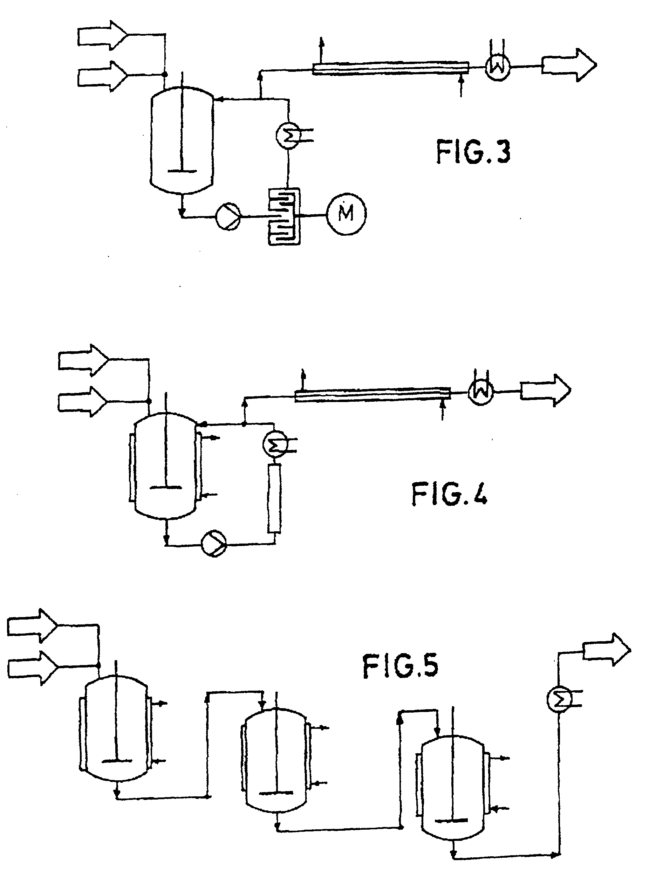

In den Kreislauf des Loopreaktors kann ein Rührkessel integriert werden, der mit einem statischen Mischelement (wie in Fig. 3 dargestellt) oder mit einem dynamischen Durchflußmischer (wie in Fig. 4 gezeigt) ausgerüstet ist. Als alternatives Reaktionssystem eignet sich für das erfindungsgemäße Verfahren auch eine Rührkesselkaskade bestehend aus wenigstens zwei oder mehr hintereinander durchströmten Rührkesseln (Fig. 5), die gegebenenfalls zur Nachkatalyse verwendet werden können.

Für den Fachmann verblüffend erweist sich die Beobachtung, daß man, verglichen mit der konventionellen Batch-Technik, wesentlich geringere Mengen an Edelmetallkatalysator zur Erzielung quantitativer Umsätze einsetzen muß. Der geringere Verbrauch an Edelmetall ist nicht nur unter dem Aspekt der Kostensenkung von Interesse, sondern nimmt auch direkten Einfluß auf die erzielte Produktqualität, da gewisse unerwünschte Verfärbungen direkt auf die Gegenwart von Übergangsmetallverbindungen zurückzuführen sind. Desweiteren wird die Abtrennung des Katalysators von der Reaktionsmischung erleichtert.

Die mit dem erfindungsgemäß beanspruchten Reaktionssystem erzielbaren Raum-Zeit-Ausbeuten übertreffen deutlich die Produktivität der konventionellen Rührkesseltechnologie.

Dadurch ist es möglich, kleine und kompakte Produktionsanlagen zu errichten, die auf begrenztem Raum durch ihre Leistungsfähigkeit überzeugen.

Als weiterer, günstiger Aspekt ist die Chemoselektivität der Hydrosilylierungsreaktion direkt mit den hohen Raum-Zeit-Ausbeuten des vorgestellten Prozesses verknüpft. Insbesondere ambidente oder multifunktionelle Reaktanden (z.B. OH-funktionelle Allylpolyether) lassen sich mit guten Ausbeuten zu den Zielprodukten umsetzen.

In einer besonderen Ausführungsform der vorliegenden Erfindung ist ein trägerfixierter Edelmetallkontakt in den Reaktionsloop integriert, so daß der Katalysator in heterogener Form die SiC-Verknüpfungsreaktion im anströmenden Fluid fördert. Hierbei wird die Produktbehaftung mit Übergangsmetallverbindungen minimiert, so daß zeitraubende Filtrationsschritte zur Entfernung des Katalysators entfallen.

Das erfindungsgemäße Verfahren sichert eine gleichbleibend hohe Produktqualität und gewährt darüber hinaus die Möglichkeit, einen hohen Automatisierungsgrad in der Produktion von organomodifizierten Siloxanen zu erzielen. Durch Festlegung der Dosierleistungen der Förderorgane in der Edukteinspeisung werden direkt die Verweilzeit im Reaktorsystem und damit der bei einer bestimmten Temperatur zu erreichende Umsatz definiert. Gekoppelt an ein übliches Meß-Steuer-Regeltechnik-System erlauben das erfindungsgemäße Verfahren oder die erfindungsgemäße Vorrichtung dann beispielsweise beim Einsatz integrierter Nah-Infrarotsonden eine Online-mäßige Adaption der Prozeßparameter an den aktuellen Betriebszustand. Dadurch können subjektivmenschliche Fehler in der Reaktionsführung eliminiert werden. Darüber hinaus wird durch die definierte Dosage der Edukte in einen Reaktionsloop eine Akkumulation von nicht umgesetzten Edukten verhindert, die Anfangsexothermie sicher abgeführt und eine sichere Prozeßführung gewährleistet.

Alternativ zu den variablen Anlageparameter kann auch mit fest eingestellten Anlagenparametern eine Anzahl vorgegebener Produkte ohne Meß-Steuer-Regeltechnik einfach und reproduzierbar hergestellt werden.

Ausführungsbeispiele:

Beispiel 1:

In dem Gefäß B1 wurden 1379 g Heptamethyltrisiloxan (4,99 Val SiH/kg) und in dem Gefäß B2 4491 g eines hydroxyfunktionellen Allylpolyethers (M ca. 522 g/mol, Struktur:

$$CH_2{=}CH{-}CH_2{-}O{-}(EO)_{6,3}{-}(PO)_{3,2}{-}OH\ ,$$

JZ: 48,6 gJ/100 g), in dem 18,1 mg cis-Diamino-platin(II) dichlorid (2 ppm Pt) gleichmäßig suspendiert sind, vorgelegt. Mit Pumpleistungen von 280 ml/h und 720 ml/h förderten die Dosierpumpen P1 und P2 die Reaktanden in den zuvor auf 130°C beheizten Loopreaktor ($V_{Loop}$ = 1 l). Die Pumpe P3 wälzte die Reaktionsmischung mit 800-1000 l/h um. Im Reaktionssystem etablierte sich ein Druck von 4 bar. Nach einer mittleren Verweilzeit von 2 Stunden verließ das Produkt den nachgeschalteten Rohrreaktor ($V_R$ = 1 l) und wurde in der Vorlage B3 isoliert.

Die gasvolumetrische SiH-Bestimmung (Zersetzung mit Na-Butanolat) belegte einen Endumsatz von ≥ 99%. Begleitende $^{29}$Si-NMR-Spektroskopie zeigte, daß die für die SiH-Gruppe charakteristische Signallage bei δ -36,5 ppm vollständig verschwunden war.

Beispiel 2:

In Analogie zu Beispiel 1 wurden 1637 g eines Polydimethylsiloxans mit seitenständigen SiH-Funktionen (Struktur: $MD_{20,5}D^H_5M$, SiH-Wert: 2,5 val/kg) in Gefäß B1 und 4564 g eines hydroxyfunktionellen Allylpolyethers (M ca. 838 g/mol,

$$CH_2{=}CH{-}CH_2{-}O{-}(EO)_{13}{-}(PO)_{3,5}{-}OH\ ,$$

JZ: 30,3 gJ/100 g) in dem 19,1 mg cis-Diamino-platin(II) dichlorid (2 ppm Pt) suspendiert waren, in Gefäß B2 vorgelegt. Die Dosierpumpen P1 und P2 förderten die Reaktanden im stöchiometrischen Verhältnis von 1,3 Val Polyether/1 Val SiH-Siloxan in den zuvor auf 130°C erwärmten Reaktionsloop. Nach einer mittleren Verweilzeit von 2 Stunden wurde ein Anlagerungsprodukt in B3 aufgefangen, das 98% SiH-Umsatz aufwies. $^{29}$Si-NMR-Spektroskopie sicherte die strukturelle Identität des Produktes mit der Zielvorgabe.

Vergleichsbeispiel 1:

In einem 2000-ml-Vierhalskolben mit KPG-Rührer, Tropftrichter und Rückflußkühler wurden 1140 g eines hydroxyfunktionellen Allylpolyethers (M ca. 522 g/mol

$$CH_2{=}CH{-}CH_2{-}O{-}(EO)_{6,3}{-}(PO)_{3,2}{-}OH\ ,$$

JZ: 48,6 gJ/100 g), zusammen mit 22,9 mg cis-Diamino-platin(II) dichlorid (≡ 10 ppm) und 35 g Heptamethyltrisiloxan (4,99 Val SiH/kg) unter kräftigem Rühren vorgelegt und zügig auf 100°C erwärmt. Die einsetzende, exotherme Reaktion führte zu einem Temperaturanstieg auf 125°C. Bei dieser Temperatur wurden weitere 315 g Heptamethyltrisiloxan so zugetropft, daß einerseits weder die Temperatur der Reaktionsmischung sank, noch daß die Gasentwicklung zu stark wurde. Nach beendeter Zugabe (1 Stunde) wurde der SiH-Umsatz gasvolumetrisch bestimmt (90,7 %). Die Reaktionsmischung wurde für weitere 7 Stunden bei 130°C gehalten und der Umsatz stündlich bestimmt. Nach 7 Stunden wurde ein Endumsatz von 96,4% erreicht.

Vergleichsbeispiel 2:

Analog Vergleichsbeispiel 1 wurden in einem 2000-ml-Vierhalskolben mit KPG-Rührer, Tropftrichter und Rückflußkühler 1254 g eines hydroxyfunktionellen Allylpolyethers (M ca. 838 g/mol,

$$CH_2{=}CH{-}CH_2{-}O{-}(EO)_{13}{-}(PO)_{3,5}{-}OH\ ,$$

JZ:30,3 gJ/100 g) zusammen mit 26,2 mg (≡ 10 ppm) cis-Diaminoplatin(II) dichlorid und 45 g eines Polydimethylsiloxans mit seitenständigen SiH-Funktionen (Struktur: $MD_{20,5}D^{H}_{5}M$, SiH-Wert: 2,5 Val/ kg) unter kräftigem Rühren vorgelegt und zügig auf 80°C erwärmt. Die Exothermie der einsetzenden Reaktion ließ die Temperatur des Ansatzes auf 112°C steigen. Nach Abklingen der Vorreaktion erwärmte man die Reaktionsmischung auf 130°C und tropfte dann weitere 405 g des Wasserstoffsiloxans so zu, daß kaum Gasentwicklung zu beobachten war und die Temperatur des Reaktionsansatzes nicht unter 125°C sank. Nach beendeter Zugabe (ca. 2 Stunden) lag der gasvolumetrisch ermittelte SiH-Umsatz bei 89% und erreichte in einer Nachreaktionsphase von weiteren zwei Stunden 97%.

**Patentansprüche**

1. Kontinuierliches Verfahren zur Herstellung von organomodifizierten Polysiloxanen durch die Übergangsmetallkatalysierte Addition von SiH-Gruppen enthaltenden Polysiloxanen an CC-Mehrfachbindungen enthaltende Substanzen, **dadurch gekennzeichnet, daß** man die Reaktanden in einen temperierbaren Schlaufenreaktor einbringt, der ein statisches Mischelement und/oder ein dynamisches Mischelement aufweist, um Edukte und gebildetes Produkt zu vermischen, das Reaktionsgemisch bis zu einem vorbestimmten Umsetzungsgrad in dem Reaktionskreislauf beläßt, anschließend das noch Edukte enthaltende Reaktionsgemisch zur Vervollständigung der Reaktion in einen Rohrreaktor oder eine Rührkesselkaskade überführt und über eine Vorlage entnimmt.

## Claims

1. Continuous process for preparing organomodified polysiloxanes by the transition metal-catalysed addition of polysiloxanes containing SiH groups onto substances containing C-C multiple bonds, **characterized in that** the reactants are introduced into a heatable and coolable loop reactor which has a static mixing element and/or a dynamic mixing element to mix starting materials and product formed, leaving the reaction mixture in the reaction circuit until a predetermined degree of conversion has been reached and subsequently transferring the reaction mixture still containing starting materials to a tube reactor or a cascade of stirred vessels to complete the reaction and taking it off via a receiver.

## Revendications

1. Procédé continu pour la préparation de polysiloxanes organo-modifiés par l'addition, catalysée par des métaux de transition, de polysiloxanes contenant des groupements SiH sur des substances contenant des liaisons multiples CC, **caractérisé en ce qu'**on introduit les réactifs dans une colonne à bulles à écoulement en boucle pouvant être thermostatée, qui présente un élément de mélange statique et/ou dynamique, pour mélanger les produits de départ et le produit formé, on laisse le mélange réactionnel dans le circuit de réaction jusqu'à un degré de transformation prédéfini, on transfère ensuite le mélange réactionnel contenant encore des produits de départ dans un réacteur tubulaire ou une cascade de réacteurs agités afin de compléter la réaction et on le prélève via un collecteur.

FIG.1

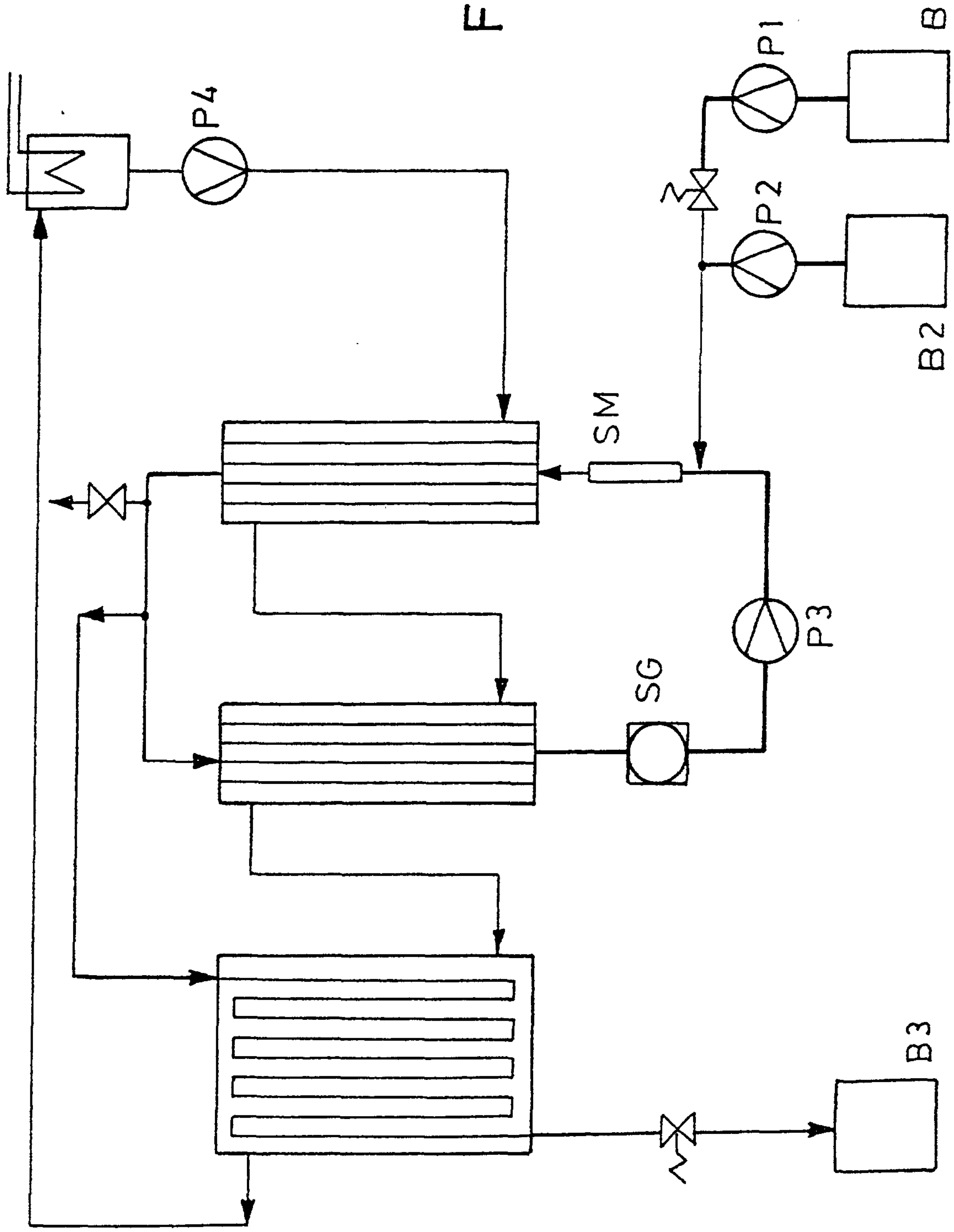

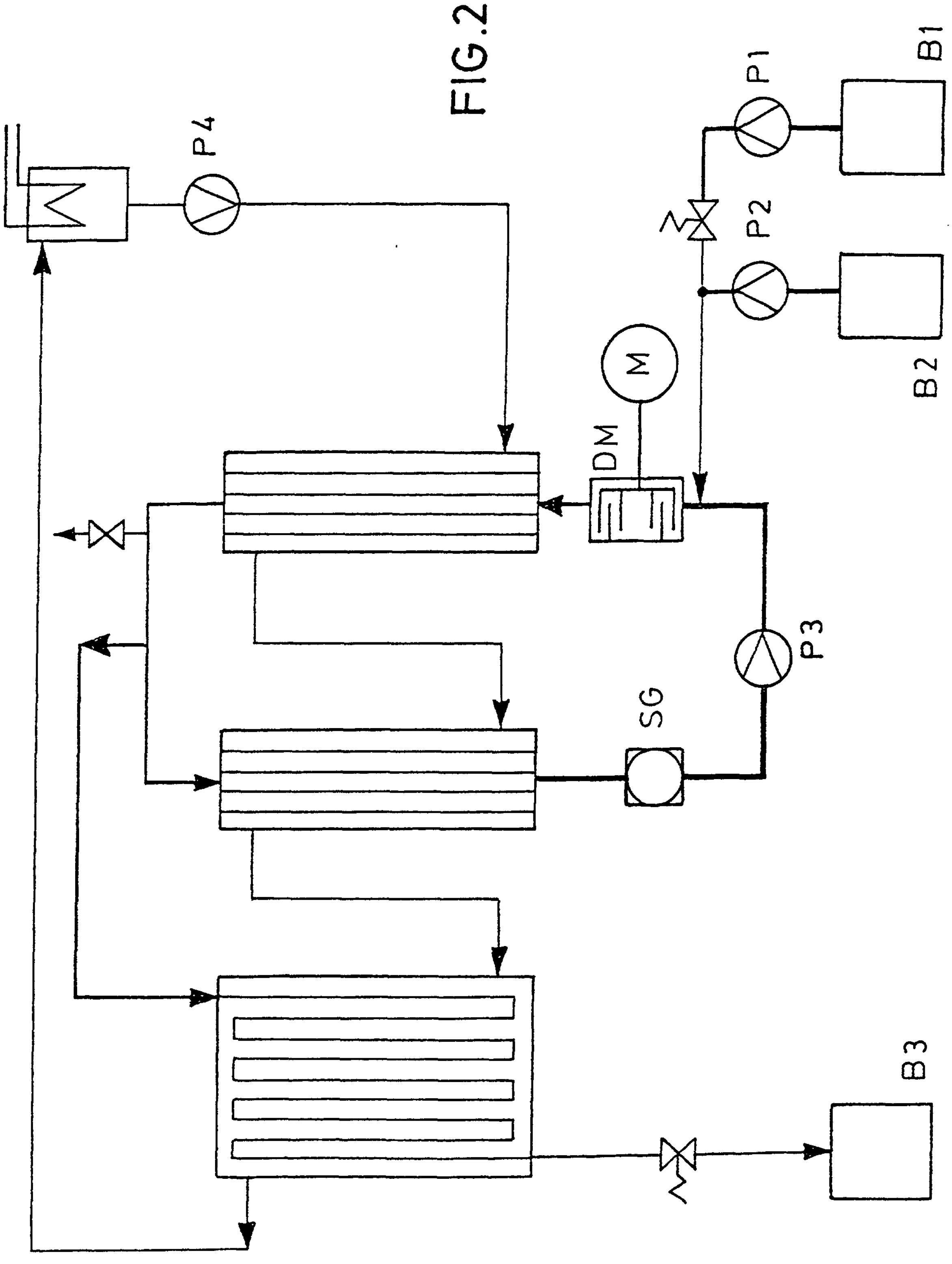


FIG.2

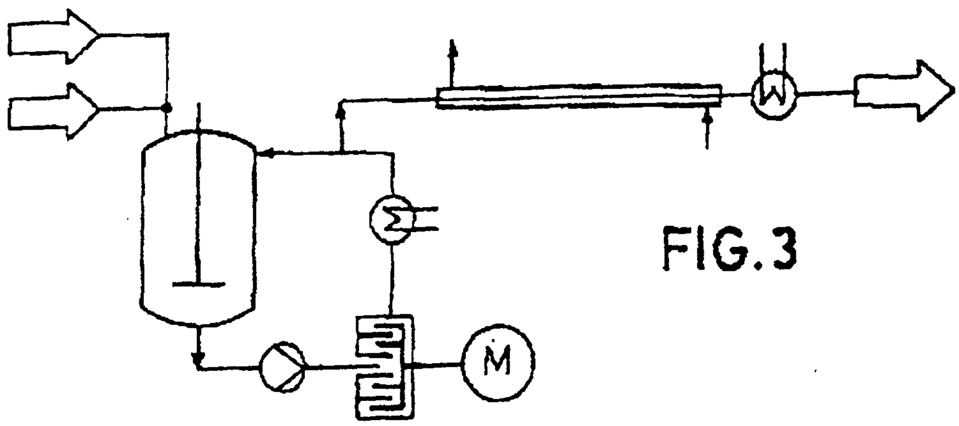


FIG.3

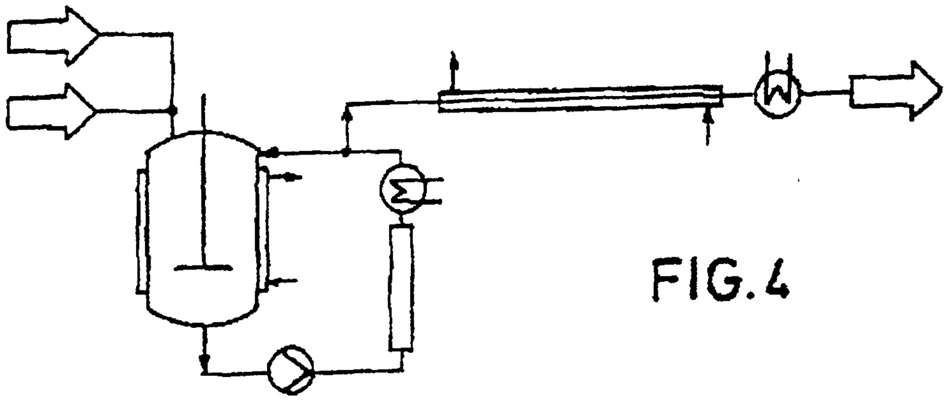

FIG.4

FIG.5